# FASCICULE DE BREVET EUROPEEN

(11) **EP 1 888 603 B1**
(45) Date de publication et mention de la délivrance du brevet: **27.03.2013**
(21) Numéro de dépôt: 06764635.6
(22) Date de dépôt: 16.05.2006
(51) Int. Cl.: C07F 7/18

(54) **PROCEDE DE PREPARATION DE COMPOSES ORGANOSILICIQUES**
VERFAHREN ZUR HERSTELLUNG VON SILICIUMORGANISCHEN VERBINDUNGEN
METHOD OF PREPARING ORGANOSILICON COMPOUNDS

(30) Priorité: 26.05.2005 FR 0505283
(43) Date de publication de la demande: 20.02.2008
(73) Titulaire: RHODIA CHIMIE, 93300 Aubervilliers (FR)
(72) Inventeur: STERIN, Sébastien, F-69450 Saint Cyr Au Mont D'or (FR)
(74) Mandataire: Delenne, Marc
(86) Numéro de dépôt international: PCT/FR2006/001098
(87) Numéro de publication internationale: WO 2006/125884

(56) Documents cités:
- US-A- 4 118 367
- MITCHELL,H.; LEBLANC,Y.: "Amination of Arenes with Electron-Deficient Azodicarboxylates" J.ORG.CHEM., vol. 59, 1994, pages 682-687, XP002363174
- DAWES, K.; ROWLEY, R.J.: "Chemical modification of natural rubber-a new silane coupling agent" PLASTICS AND RUBBER: MATERIALS AND APPLICATIONS, vol. 3, 1978, pages 23-26, XP009060017
- DAWES, K.; ROWLEY, R.J.: "Chemical Modifications of Natural Rubber-A new Silane Coupling Agent" RUBBERCON '77, 1977, pages 18.1-18.11, XP009060018

## Description

Le domaine de l'invention est celui de la synthèse de composés organosiliciques fonctionnalisés.

Les composés organosiliciques plus spécialement concernés par l'invention sont ceux comprenant au moins un groupe azo activé. Cette activation peut résulter, par exemple, de la présence de groupements carbonyle voisins des azotes. La partie organosilicique de ces composés peut comprendre par exemple des groupements hydrolysables ou condensables de type ≡SiOR ou ≡SiOH.

De tels composés organosiliciques à groupe(s) azo activé(s) disponibles (comme par exemple ceux à groupe -CO-N=N-CO-) sont très utiles, notamment dans la synthèse de molécules organiques actives (par exemple hétérocycles azotés) utilisables dans les domaines de l'agrochimie et de la pharmacie, par exemple en tant que diénophiles en réaction d'hétéro-Diels Alder.

Cependant, peu de ces composés sont accessibles en particulier en raison de leur préparation difficile. Il serait donc souhaitable de pouvoir élargir la palette des composés organosiliciques disponibles.

Dans un art antérieur peu fourni, on relève la demande de brevet FR-A-2340323, qui divulgue des composés organosiliciques de formule (I*) :

Y-X-CO-N=N-CO-X¹-Z*

dans laquelle X et X¹ sont identiques ou différents et représentent chacun un groupement imino, un atome d'oxygène ou un groupement méthylène substitué ou non substitué ; Y est un groupement alkyle, aryle ou aralkyle substitué ou non, ou est identique à Z* ; Z* est un groupement alkyle, aryle ou aralkyle qui présente comme substituant au moins un groupe silane de formule Si(OR)₃ ou OSi(OR)₃ dans laquelle R est un groupement alkyle à chaîne droite ou ramifiée, de préférence avec 1 à 6 atomes de carbone.

Des composés organosiliciques de formule (II*) & (III*) :

(II*): R^{1*}-O-CO-N N-CO-NH-(C₆H₆)-(CH₂)ₘ-Si(OR^{2*})₃

(III*) : R^{1*}-O-CO-N=N-CO-NH-(CH₂)ₙ-Si(OR^{2*})₃

dans lesquelles R^{1*} et R^{2*} sont identiques ou différents et représentent chacun un groupement alkyle à chaîne droite ou ramifiée contenant de préférence entre 1 et 6 atomes de carbone, m est égal à 0, 1, 2 ou 3 et n est égal à 1, 2 ou 3, sont cités.

Un composé organosilicique à groupements azo de formule Ethyl-O-CO-N=N-CO-NH-(CH₂)₃-Si(OEthyl)₃, conforme à la formule (III*), est divulgué dans l'exemple 3.

L'étape clé de la synthèse de ce type de composés organosiliciques à groupe azo activé réside dans l'oxydation d'une fonction de type hydrazo (NH-NH) en fonction azo (N=N) correspondante.

Selon FR-A-2340323, cette transformation est effectuée à l'aide d'un système oxydant comprenant un oxydant formé par un dérivé halogéné (chlore, brome, N-Bromosuccinimide entre autres exemples) et une base de type pyridine.

Ainsi, le procédé décrit dans l'exemple 3 de FR-A-2340323 prévoit la mise en oeuvre d'une solution organique de précurseur Ethyl-O-CO-HN-NH-CO-NH-(CH₂)₃-Si(OEthyl)₃ et de pyridine, dans du dichlorométhane. Du N-bromosuccinimide (NBS) est ajouté dans cette solution qui est maintenue sous agitation pendant 2 heures après l'ajout de NBS. Le solvant et la pyridine sont éliminés par évaporation sous vide, tandis que les sels solides générés lors de la réaction sont alors éliminés par filtration. Après lavage du rétentat, on récupère dans le filtrat, le composé organosilicique à groupements azo de formule (III*). Selon ce document, le système oxydant NBS- pyridine est en excès (10 % molaire) par rapport au précurseur.

Enfin, le produit final n'est pas pur. Il contient des résidus indésirables et pénalisants, notamment, en termes d'hygiène industrielle et d'écotoxicité d'une part, et, d'autre part, en termes de performances dans les applications.

Ce procédé connu souffre d'au moins quatre inconvénients.
1. L'utilisation de NBS solide est un facteur opératoire très pénalisant dans un procédé industriel.
2. Ce procédé est perfectible en termes de rendement et de productivité.
3. Ce procédé est relativement coûteux et gagnerait à être amélioré sur le plan économique.
4. Enfin, la qualité du produit final (I*, II*, III*) obtenu laisse à désirer en particulier au regard de la pureté et plus précisément s'agissant de la présence de résidus pyridiniques indésirables dans le produit final. Ces résidus sont pénalisants pour la qualité du produit final, notamment d'une part, en termes d'hygiène industrielle et d'écotoxicité, et, d'autre part, en termes de performances dans les applications de ces composés organosiliciques fonctionnalisés, de préférence à groupe(s) azo activé(s).

Dans cet état de la technique, l'un des objectifs essentiels de la présente invention est de proposer un procédé perfectionné de préparation de composés organosiliciques à groupement(s) azo, par oxydation du groupement hydrazino d'un précurseur en groupement azo.

Un autre objectif essentiel de l'invention est de fournir un procédé de préparation de composés organosiliciques à groupement(s) azo, qui permette de s'affranchir de réactifs solides tels que le NBS solide, qui compliquent quelque part le procédé, notamment pour l'incorporation au milieu réactionnel.

Un autre objectif essentiel de l'invention est de fournir un procédé de préparation de composés organosiliciques à groupement(s) azo, qui soit plus performant que ceux de l'art antérieur, notamment en termes de productivité et de rendement en azoalcoxysilane visé.

Un autre objectif essentiel de l'invention est de fournir un procédé de préparation de composés organosiliciques à groupement(s) azo, qui soit économique.

Un autre objectif essentiel de l'invention est de fournir un procédé de préparation de composés organosiliciques à groupement(s) azo, qui permette d'optimiser la qualité du produit final, notamment en ce qui concerne la pureté en composés organosiliciques et surtout en réduisant à l'état de traces, voire en supprimant les résidus indésirables de la base mise en oeuvre, et notamment les résidus pyridiniques lorsque la base comprend de la pyridine. Ce faisant, on améliore le procédé sur le plan de la qualité du produit final, de l'hygiène industrielle et des répercussions sur l'environnement.

Ces objectifs, parmi d'autres, sont atteints par l'invention qui concerne, tout d'abord, un procédé de préparation de composés organosiliciques comprenant un ou plusieurs composés, identiques ou différents entre eux, de formule (I) ci-après détaillée :

[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)

dans laquelle :
- m, n, o, p représentent chacun un nombre entier ou fractionnaire égal ou supérieur à 0 ;
- q représente un nombre entier ou fractionnaire égal ou supérieur à 1 ;
- a représente un nombre entier choisi parmi 0,1, 2 et 3 ;
- a' représente un nombre entier choisi parmi 0,1 1 et 2 ;
- la somme a + a' se situe dans l'intervalle allant de 0 à 3 avec les conditions selon lesquelles :
   - (Cl)- quand a = 0, alors :
      ⇒ soit au moins un des m, n, o, p est un nombre différent de 0 (zéro) et q est égal ou supérieur à 1 ;
      ⇒ soit q est supérieur à 1 et chacun des m, n, o, p a une valeur quelconque,
      ⇒ et au moins un des symboles G⁰ répond à la définition donnée ci-après pour G²;
   - (C2)- et quand a + a' = 3, alors m = n = o = p = 0 (zéro);
- les symboles G⁰, identiques ou différents, représentent chacun l'un des groupes correspondant à G² ou G¹ ;
- les symboles G², identiques ou différents, représentent chacun : un groupe hydroxyle, un groupe monovalent hydrolysable ou deux G² forment ensemble et avec le silicium auquel ils sont liés, un cycle ayant 3 à 5 chaînons hydrocarbonés et pouvant comprendre au moins un hétéroatome, au moins l'un de ces chaînons pouvant également être un chaînon d'au moins un autre cycle hydrocarboné ou aromatique ;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé où insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
   + un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
   + un groupe -X-G³ où : X représente -O-, -S- ou NG⁴- avec G⁴ prenant l'une quelconque des significations données ci-avant pour G¹ ; G³, identique ou différent de G⁴, représente l'un quelconques des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
   + ou, lorsque q = 1, un groupe [-Z-SiO_{(3-a-a')/2}(G²)ₐ(G¹)_{a'}] [(G⁰)₃SiO_{1/2}]ₘ [(G⁰₂SiO_{2/2}]ₙ [G⁰SiO_{3/2}]ₒ [SiO_{4/2}]ₚ dans lequel les symboles Z, G¹, G², a, a', m, n, o, et p possèdent les définitions indiquées ci-avant ;
      ⇒ ce procédé étant du type de ceux consistant
      ■ à mettre en oeuvre au moins un précurseur (II) d'au moins un composé organosilicique (I), ledit précurseur répondant à la formule (II) suivante :

         [(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-HN-NH-CO-A)-SiO_{(3-a-a')/2}] (II)

         dans laquelle les symboles G°, G¹, G² , Z, A, m, n, o, p, a, a' et q sont tels que définis ci-dessus en légende de la formule (I),
      ■ à oxyder le groupement hydrazino du précurseur (II) en groupement azo propre au composé organosilicique à groupe(s) azo activé(s) (I), à l'aide d'un système oxydant comprenant au moins un oxydant (Ox) et au moins une base (B),
      ■ et, dans le cas où la condition -(C1)- s'applique, à faire intervenir un réactif supplémentaire choisi parmi les silanes (pris seuls ou en mélange entre eux) de formule (III) :

         (G^{0O})₄₋ₚ₁Si (G^{2'})ₚ₁

         dans laquelle :
      * les symboles G° identiques ou différents, représentent chacun : un groupe hydrocarboné aliphatique, saturé ou insaturé ; un groupe carbocyclique, saturé ou insaturé et/ou aromatique, monocyclique ou polycyclique; ou un groupe représentant une partie hydrocarbonée aliphatique, saturée ou insaturée et une partie carbocyclique telle que définie ci-dessus; ou un reste polysiloxane;
      * les symboles G^{2'} étant identiques ou différents et représentant un groupement monovalent hydrolysable répondant à la même définition que celle donnée supra pour les symboles G² décrits en relation avec la formule (I),
      * p1 représente un nombre entier choisi parmi 1 et 2, de préférence 1;
         ⇒ et ce procédé étant caractérisé en ce que :
         1) Ox est choisi dans le groupe comprenant : le brome, l'hypochlorite de tertiobutyle, l'acide trichloroisocyanurique, le chlore et leurs mélanges;
         2) et/ou Ox (éventuellement B) est (sont) mis en oeuvre en quantités stoechiométriques par rapport au précurseur (II) ;
         3) et/ou on soumet les composés organosiliciques (I) ainsi préparés à un post-traitement de purification visant à éliminer notamment les éventuels résidus indésirables de la base B utilisée.

Il est du mérite des inventeurs d'avoir trouvé une alternative aux réactifs oxydants NBS connus dans ce type de réaction, sans avoir porté atteinte aux performances du procédé (rendement /productivité), ni à la qualité du produit, et ce, tout en permettant au procédé de devenir plus économique.

En outre, ces composés (I) obtenus par le procédé selon l'invention sont remarquablement purs. En particulier, ces composés ne comportent pas ou peu (traces non détectables) de résidus indésirables provenant, par exemple, de la base B, tels que des résidus pyridiniques quand B comprend de la pyridine.

Sans vouloir être lié par la théorie, il est possible que cette pureté soit à l'origine de l'excellente stabilité constatée pour ces composés (I) issus du procédé biphasique selon invention. Par "stabilité", on entend notamment stabilité au stockage en particulier dans des conditions humides, mais surtout stabilité à la chaleur.

Selon une modalité alternative ou cumulative, il est prévu d'utiliser Ox en quantité stoechiométrique par rapport au précurseur (II), alors que dans le procédé connu selon la demande FR-A-2340323 l'oxydant est en excès.

Selon une modalité particulière du procédé selon l'invention, on utilise une base B comprenant de la pyridine en quantité stoechiométrique par rapport au précurseur (II). Cet usage de pyridine en quantité limitée représente un progrès significatif par rapport à l'art antérieur, car, comme déjà expliqué supra, la pyridine forme des résidus indésirables très difficiles à éliminer des composés organosiliciques finaux (I).

Conformément à un mode de mise en oeuvre intéressant, permettant l'optimisation de la pureté des composés organosiliciques finaux (I) visés, il est proposé un post-traitement en une ou plusieurs étapes permettant d'améliorer significativement la qualité des composés organosiliciques finaux (I), en contribuant à l'élimination totale ou quasi-totale des résidus indésirables provenant, par exemple, de la base B, en particulier des résidus pyridiniques susceptibles d'être présents lorsque la base B comprend de la pyridine. Ce post-traitement est d'autant plus remarquable qu'il n'affecte pas le rendement et/ou la productivité en composés organosiliciques finaux (I).

Le procédé selon l'invention de préparation des composés organosiliciques à groupement azo (I), peut s'inscrire dans un procédé de synthèse comportant au moins les étapes suivantes :
(i) : on fait réagir un silane précurseur de formule (IV) :

   [(G⁰)₃SiO_{1/2}]ₘ[(G⁰)₂SiO_{2/2}]ₙ [G⁰SiO_{3/2}]ₒ [SiO_{4/2}]ₚ [(G²)ₐ(G¹)_{a'} L¹SiO_{(3-a-a')/2}]_{q} (IV)

   avec un dérivé hydrazo précurseur de formule (V) :

   L²-NH-NH-CO-A (V)

   formules dans lesquelles les symboles G°, G¹, G² -m,n,o,p,q,a,a' et A sont tels que définis ci-avant, et L¹ et L² représentent des groupes dont la structure et la fonctionnalité sont telles que ces groupes sont capables de réagir l'un avec l'autre pour donner naissance à l'enchaînement central -Z-CO- de manière-à conduire au précurseur de formule (II) :

   [(G⁰)₃SiO_{1/2}]ₘ[(G⁰)₂SiO_{2/2}]ₙ [G⁰SiO_{3/2}]ₒ [SiO_{4/2}]ₙ [(G²)ₐ(G¹)_{a'}(Z-CO-HN-NH-CO-A)SiO(_{3-a-a')/2}]_{q} (II)
(ii) : on fait subir au précurseur de formule (II) une réaction d'oxydation du groupe hydrazo HN-NH- en groupe azo -N=N-.

L'oxydation de l'étape (ii) correspond au procédé de préparation selon la présente invention.

Pour la préparation, par exemple, des composés organosiliciques à groupement azo (I), dans la structure desquels le symbole Z représente alors le radical divalent -(CH₂)₃-NH-, le schéma de synthèse qui est appliqué peut être le suivant :
(i) : on fait réagir un silane précurseur de formule (IV) :

   [(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}SiO_{(3-a-a')/2} L¹-(CH₂)₃-NCO]_{q} (IV)

   avec un dérivé hydrazo précurseur de formule (V) :

   H₂N-NH-CO-A (V)

   pour obtenir le composé hydrazo de formule (II) :

   [(G⁰)₃SiO_{1/2}]ₘ [(G⁰)₂SiO_{2/2}]ₙ [G⁰SiO_{3/2}]ₒ [SiO_{4/2}]p [(G²)ₐ(G¹)_{a'} SiO_{(3-a-a')/2} -(CH₂)₃-NH-CO-NH-NH-CO-A (II)
(ii) : on fait subir au composé de formule (II) une réaction d'oxydation du groupe hydrazo -HN-NH- en groupe azo, -N=N-.

En résumé, l'étape (i) d'obtention du précurseur (II) et l'étape (ii) d'oxydation de (II) en (I) sont conformes à la méthodologie générale suivante :
ETAPE (i):
   o Mise en oeuvre dérivé hydrazo précurseur de formule (V) et solvant, à température ambiante dans le réacteur, sous atmosphère inerte.
   o Agitation à plusieurs centaines de tours/min et chauffage à T= 40-100°C.
   o Addition du silane précurseur de formule (IV) en plusieurs dizaines de minutes.
   o Réaction pendant plusieurs heures sous agitation à T= 40-100°C avant retour à température ambiante.
   o Repos quelques heures à température ambiante.
   o Récupération précurseur de formule (II) solide (par exemple), filtration, lavage, séchage.
ETAPE (ii):
   - Mise en oeuvre du précurseur (II), du solvant organique, du tampon aqueux et/ou d'eau et/ou d'adjuvant (A) à température ambiante dans le réacteur, sous atmosphère inerte.
   - Ajout de oxydant (Ox) et de (B°), (B¹) dans le réacteur simultanément, en petites quantités (e.g. goutte à goutte) et très lentement (quelques minutes à plusieurs heures, e.g. en 0,5- 2 heure), à température inférieure à 30°C de préférence à température ambiante.
   - Agitation à température ambiante pendant plusieurs heures.
   - Extraction phase aqueuse et rassemblement phase organique.
   - Séparation phase organique.
   - Eventuellement séchage.
   - Eventuellement filtration.
   - Concentration.
   - Récupération composé organosilicique à groupe azo activé (I).

De préférence, la purification des composés organosiliciques (I) est réalisée par la mise en oeuvre d'un post-traitement qui permet de réduire, voire de supprimer la teneur en impuretés. Ces dernières peuvent par exemple provenir dela base B. Ainsi, lorsque la base B contient de la pyridine, les résidus peuvent être pyridiniques, lesquels sont particulièrement indésirables du point de vue de l'hygiène industrielle et des performances des composés (I) dans les applications.

Ainsi, selon une modalité préférée de l'invention, le post-traitement consiste essentiellement à mettre en contact les composés organosiliciques (I) avec un piège à impuretés, ce piège étant sélectionné :
■ parmi les supports à affinité ionique, de préférence parmi ceux appartenant au groupe comprenant: le noir de carbone ;
■ et/ou parmi les supports a affinité chimique, de préférence parmi ceux appartenant au groupe comprenant: les résines à caractère acide.

Plus préférablement encore, le post-traitement consiste essentiellement:
a) à mélanger un support à affinité ionique, de préférence le noir de carbone, avec une solution organique d'agent de charge, à raison de 0,1 à 20 % en poids, de préférence à raison de 1 à 10 % en poids de support à affinité ionique par rapport à l'agent de charge,
b) à laisser en contact de préférence sous agitation de quelques minutes à plusiers heures,
c) à séparer le support chargé en impuretés de la solution d'agent de charge, de préférence par filtration,
d) à éliminer le solvant de préférence par évaporation,
e) à mélanger un support à affinité chimique, de préférence une résine à caractère acide (avantageusement une résine légèrement acide du type IR50), avec une solution organique de l'agent de charge, à raison de 0,01 à 10 % en poids, de préférence à raison de 0,1 à 5 % en poids de support à affinité chimique par rapport à l'agent de charge,
f) à laisser en contact, de préférence, sous agitation de quelques minutes à plusieurs heures,
g) à séparer le support chargé en impuretés de la solution d'agent de charge, de préférence par filtration,
h) à éliminer le solvant de préférence par évaporation.
les étapes e) à h) pouvant éventuellement être réalisées avant les étapes a) à d) ou simultanément.

En fait, les étapes a) à d) constituent un premier traitement et les étapes e) à h) un second traitement, ces deux traitements peuvent être mis en oeuvre simultanément ou successivement dans n'importe quel ordre.

En outre, il est possible que le post-traitement mis en oeuvre dans le procédé selon l'invention comprenne l'un seulement de ces deux traitements a) à d), d'une part, et e) à h), d'autre part.

Au-delà des conditions opératoires générales décrites ci-dessus, il convient de s'attarder un peu plus sur les composés (I) organosiliciques à groupement(s) fonctionnel(s) azo activé(s) (I), obtenus ou susceptibles d'être obtenus par ce procédé selon l'invention.

Comme indiqué supra, ces composés (I) sont exempts ou quasi-exempts (traces indétectables) d'impuretés, notamment de résidus pyridiniques. L'invention vise donc à titre de produits nouveaux, des composés (I) organosiliciques à groupement(s) fonctionnel(s) azo activé(s) (I), susceptibles d'être obtenus par le procédé selon l'invention caractérisés en ce qu'ils sont exempts ou quasi-exempts (traces indétectables) d'impuretés, notamment de résidus pyridiniques.

De préférence, ces nouveaux composés organosiliciques (I) peuvent être caractérisés par une teneur (% en poids) en résidus pyridiniques inférieure ou égale à 0,3, de préférence à 0,2, et, plus préférentiellement encore, à 0,1.

Ces composés (I) organosiliciques à groupement(s) fonctionnel(s) azo activé(s) (I), susceptibles d'être obtenus par le procédé selon l'invention, sont également caractérisés en ce qu'ils sont stables à la chaleur e.g. à des températures comprises entre 80-180°.

L'invention concerne également à titre de produits de nouveaux, les composés (I) organosiliciques à groupement(s) fonctionnel(s) azo activé(s) (I) caractérisés par un taux d'hydrolyse/condensation (% molaire) des fonctions G² inférieur ou égal à 40, de préférence à 10, et, plus préférentiellement encore, à 1.

Par ailleurs, on revient dans ce qui suit sur la signification des symboles de la formule (I) supra.

Tout d'abord, on doit bien comprendre que le groupement (Z-CO-N=N-CO-A) est relié à l'atome de Si du motif SiO_{(3-a-a')/2} par l'intermédiaire du radical divalent -Z-.
En outre, par groupe hydrocarboné aliphatique, on entend, au sens de l'invention, un groupe linéaire ou ramifié, de préférence comprenant de 1 à 25 atomes de carbone, éventuellement substitué.

Avantageusement, ledit groupe hydrocarboné aliphatique comprend de 1 à 18 atomes de carbone, mieux de 1 à 8 atomes de carbone et mieux encore de 1 à 6 atomes de carbone.

A titre de groupe hydrocarboné aliphatique saturé, on peut citer les groupes alkyle, tels que les radicaux méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle, hexadécyle.
Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C₁₈, de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturations éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C₁₀.
Des exemples de radicaux carbocycliques aromatiques sont les groupes (C₆-C₁₈)aryles, mieux encore (C₆-C₁₂)aryles et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont on a parlé supra à propos des symboles G², on entend des groupes tels que, par exemple : les atomes d'halogène, notamment le chlore ; les groupes -O-G⁷ et -O-CO-G₇où G₇ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G₇ pouvant être éventuellement halogéné et/ou substitué par un ou plusieurs alcoxy ; les groupes -O-N=CG₈G₉ dans lesquels G₈ et G₉ prennent indépendamment l'une quelconque des significations données ci-dessus pour G₇, Gg et G₉ pouvant être halogénés ou/et éventuellement substitués par un ou plusieurs alcoxy ; les groupes -O-NG₈G₉ dans lesquels G₈ et G₉ sont tels que définis ci-dessus.

Avantageusement, pareil groupe monovalent hydrolysable est un radical : alcoxy, linéaire ou ramifié, en C₁-C₈ éventuellement halogéné et/ou éventuellement substitué par un ou plusieurs (C₁-C₈)alcoxy ; acyloxy en C₂-C₉ éventuellement halogéné ou éventuellement substitué par un ou plusieurs (C₁-C₈)alcoxy ; cycloalkyloxy en C₅-C₁₀ ou aryloxy en C₆-C₁₈. A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou β-chloroéthoxy ou bien encore acétoxy.

Comme groupes carbocycliques monovalents que peuvent former ensemble, dans la formule (I), deux substituants G² et l'atome de silicium auquel ils sont liés, on citera par exemple les cycles :

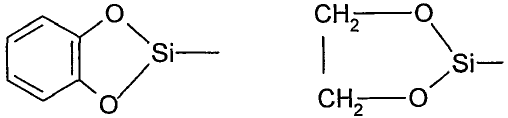

Comme cycles uniques que peuvent former ensemble d'une part les substituants G³ et G⁴ de l'atome d'azote présent dans le symbole A de la formule (I) et d'autre part les substituants R² et R³ de l'atome d'azote présent dans le symbole J de la formule (III), on citera par exemple les cycles suivants où la valence libre est portée par un atome d'azote : le pyrrole, l'imidazole, le pyrazole, la pyrrolidine, la Δ2-pyrroline, l'imidazolidine, la Δ2-imidazoline, la pyrazolidine, la Δ3-pyrazoline, la pipéridine ; des exemples préférés sont : le pyrrole, l'imidazole et le pyrazole.

Dans des formes F1 préférées de la formule (I) :
■ les symboles G⁰, identiques ou différents, répondent à la même définition que celle donnée ci-après pour les radicaux G¹ ou G² ;
■ les symboles G₁, identiques ou différents, représentent chacun : un radical alkyle, linéaire ou ramifié, en C₁-C₈ ; un radical cycloalkyle en C₅-C₁₀ou un radical aryle en C₆-C₁₈ ;
■ les symboles G₂, identiques ou différents, représentent chacun : un radical alkoxy, linéaire ou ramifié, en C₁-C₈, éventuellement substitué par un ou plusieurs (C₁-C₈)alkoxy ;
■ Z représente le radical divalent Z'- Z"- où :
   - Z' représente : une chaîne alkylène en C₁-C8 ; un groupe cycloalkylène saturé en C₅-C₁₀ ; un groupe arylène en C₆-C₁₈ ; ou un groupe divalent constitué d'une combinaison d'au moins deux de ces radicaux ;
   - Z" représente : -O- ou NR⁴-, avec R⁴ étant : un atome d'hydrogène ; un radical alkyle, linéaire ou ramifié, en C₁-C₈ ; un radical cycloalkyle en C₅-C₁₀ ; un radical aryle en C₆-C₁₈; ou un radical (C₆-C₁₈)aryl-(C₁-C₈)alkyle ;
■ A désigne un groupe -O-G³ ou -NG⁴G³ où G³ et G ⁴ identiques ou différents entre eux, représentent chacun : un radical alkyle, linéaire ou ramifié, en C₁-C₈ ; un radical cycloalkyle en C₅-C₁₀ ou un radical aryle en C₆-C₁₈.

Dans des formes F2 plus préférées de la formule (I) :
■ les symboles G^{o}, identiques ou différents, répondent à la même définition que celle donnée ci-après pour les radicaux G¹ ou G²;
■ les symboles G₁, identiques ou différents, sont choisis dans le groupe formé par les radicaux méthyle, éthyle, propyle, isopropyle, cyclohexyle et phényle ;
■ les symboles G₂, identiques ou différents, sont choisis dans le groupe formé par les radicaux méthoxy, éthoxy, n-propoxy, isopropoxy, n-butoxy, méthoxyméthoxy, éthoxyéthoxy et méthoxyéthoxy ;
■ Z représente le radical divalent Z'- Z"- où :
   - Z' représente : une chaîne alkylène en C₁-C₈ ;
   - Z" représente : -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

Dans des formes F3 encore plus préférées de la formule (I) :
■ les symboles G⁰, identiques ou différents, représentent chacun l'un des radicaux choisis ci-après pour G¹ ou G² ;
■ les symboles G₁, identiques ou différents, sont choisis dans le groupe formé par les radicaux méthyle, éthyle, propyle, isopropyle, cyclohexyle et phényle ;
■ les symboles G₂, identiques ou différents, sont choisis dans le groupe formé par les radicaux méthoxy, éthoxy, n-propoxy, isopropoxy et n-butoxy ;
■ Z représente le radical divalent Z'- Z"- où :
   - Z' est choisi dans le groupe formé par les radicaux divalents méthylène, éthylène et propylène ;
   - Z" représente : -O- ou -NR⁴- avec R⁴ étant un atome d'hydrogène ;
■ A désigne un groupe -O-G³ où G³ est choisi dans le groupe formé par les radicaux méthyle, éthyle, propyle, isopropyle, cyclohexyle et phényle.

Selon une réalisation de prédilection, les composés organosiliciques fonctionnalisés de formule générale (I) sont choisis dans le groupe des espèces suivantes :
■ (i) organosilanes fonctionnalisés correspondant à la formule (I) dans laquelle : a + a' = 3;m=n=o=p=0(zéro);et q=1;
■ (2i) oligomères siloxanes fonctionnalisés correspondant à la formule (I) dans laquelle : a + a' = 1 ou 2 ; m se situe dans l'intervalle allant de 1 à 2; n=p= o = 0 (zéro) ; et q = 1;
■ (3i) mélanges d'au moins une espèce (i) et/ou d'au moins une espèce (2i).

Les oligomères siloxanes (2i) constituent un sous-groupe de composés de formule (I). Ce sous-groupe est issu d'un groupe de composés de formule (I) correspondant à la condition -(C1)- du procédé selon l'invention, à savoir quand a = 0, alors :
⇒ soit au moins un des m, n, o, p est un nombre différent de 0 (zéro) et q est égal ou supérieur à 1 ;
⇒ soit q est supérieur à 1 et chacun des m, n, o, p a une valeur quelconque,
⇒ et au moins un des symboles G⁰ répond à la définition donnée ci-après pour G²

Pour obtenir ces composés (I) satisfaisant à la condition -(C1)-, il convient de mettre en oeuvre un réactif supplémentaire (III) pendant oxydation correspondant.

La quantité de réactif supplémentaire (III) mise en oeuvre n'est pas critique, mais il est préférable, conformément à l'invention, que cette quantité, par rapport au précurseur (II), soit d'au moins 0,1 M, de préférence d'au moins 1M jusqu'à 100M ou davantage, et, plus préférentiellement encore soit comprise entre 1 et 10M.

Un exemple de réactif supplémentaire (III) est le triméthyléthoaysilane.

Avantageusement, les espèces (2i) se subdivisent en sous-espèces :
■ (2i.1) oligomères siloxanes fonctionnalisés correspondant à la formule (I) dans laquelle: a + a' = 2 ; m = 1 ; n = p = o = 0 (zéro) ; et q = 1 ;
■ (2i.2) oligomères siloxanes fonctionnalisés correspondant à la formule (I) dans laquelle: a + a' = 1 ; m = 2 ; n = p = o = 0 (zéro) ; et q = 1.

Selon une déclinaison intéressante de la réalisation de prédilection, les composés organosiliciques fonctionnalisés de formule générale (I) sont choisis dans le groupe des (sous)espèces suivantes :
■ (i) organosilanes fonctionnalisés correspondant à la formule (I) dans laquelle : a + a' = 3 ; m = n = o = p = 0 (zéro);et q = *1;
■ (2i.1) oligomères siloxanes fonctionnalisés correspondant à la formule (I) dans laquelle : a+a'=2;m=1 ;n=p=o=0 (zéro) ; et q=1 ;
■ (2i.2) oligomères siloxanes fonctionnalisés correspondant à la formule (I) dans laquelle :a+a'=1;m=2;n=p=o=0(zéro);etq=1.
■ (3i) mélanges d'au moins une espèce(s) (i) et/ou d'au moins une sous-espèce(s) (2i.1) et/ou d'au moins une sous-espèce(s) (2i.2).

Au sein de cette déclinaison, des composés organosiliciques fonctionnalisés de formule générale (I) particulièrement préférés sont ceux formés par un mélange (3i) d'au moins une espèce(s) (i) et/ou d'au moins une sous-espèce(s) (2i.1) et/ou d'au moins une sous-espèce(s) (2i.2).

En pratique, il est possible que les composés organosiliciques selon l'invention comprennent au moins un mélange (3i) incluant des composés (i) et/ou (2i.1) et/ou (2i.2) de formule (I) dans laquelle :
■ les symboles G°, identiques ou différents, répondent aux définitions données ci-dessous pour G¹, G²;
■ les symboles G₁, identiques ou différents, sont choisis dans le groupe formé par les radicaux méthyle, éthyle, propyle, isopropyle, cyclohexyle et phényle ;

■ les symboles G₂, identiques ou différents, sont choisis dans le groupe formé par les radicaux méthoxy, éthoxy, n-propoxy, isopropoxy et n-butoxy ;
■ A désigne un groupe -O-G³ où G³ est choisi dans le groupe formé par les radicaux méthyle, éthyle, propyle, isopropyle, cyclohexyle et phényle.
■ Z représente le radical divalent Z'-NR⁴- où :
   - Z' est choisi dans le groupe formé par les radicaux divalents méthylène, éthylène et propylène ;
   - R⁴ est un atome d'hydrogène.

Dès lors que que l'on utilise pas de réactif supplémentaire (III), les composés produits sont des silanes de l'espèce (i) ou , en d'autres termes ceux répondant à la formule (I') suivant:

(G²)ₐ(G¹)_{a'}(Z-CO-N N-CO-A)SiO_{(3-a-a')/2} (I')

dans laquelle
⇒ a représente un nombre entier choisi parmi 1, 2 et 3 ;
⇒ a' représente un nombre entier choisi parmi 0, 1 et 2 ;
⇒ a+a'=3 ;
⇒ les symboles G_{1,} G₂, Z et A répondent aux mêmes définitions que celles données ci-dessus pour les formes F1, F2 ou F3 préférées.

Plus préférablement encore, les silanes de formule (I) dans laquelle a représente un nombre entier égal à 3 et les symboles G₁, G₂, Z et A répondent aux mêmes définitions que celles données ci-dessus pour la forme F3 préférée.

Comme exemples de silanes (i) de formule (I') qui conviennent spécialement bien, on citera notamment les espèces de type (i) où a=3, a'=0, m=n=o=p=0 et q=1, de formules :

(iₐ): (C₂H₅O)₃Si-(CH₂)₃-NH-CO-N=N-COOC₂H₅

(i_{b}): (C₂H₅O)₃Si-(CH₂)₃-NH-CO-N=N-COOCH₃

(i_{c}): (CH₃O)₃Si-(CH₂)₃-NH-CO-N=N-COOC₂H₅

(i_{d}): (n-C₄H₉O)₃Si-(CH₂)₃-NH-CO-N=N-COO₂H₅

(iₑ): (C₂H₅O)₂(Me₃SiO)Si-(CH₂)₃-NH-CO-N=N-COOC₂H₅

(i_{f}) : (C₂H₅O)₂ (Me₃SiO)Si-(CH₂)₃-NH-CO-N=N-COOCH₃

(i_{g}): (CH₃O)₂ (Me₃SiO)Si-(CH₂)₃-NH-CO-N=N-COOC₂H₅

(iₕ): (n-C₄H₉O)₂ (Me₃SiO)Si-(CH₂)₃-NH-CO-N=N-COOC₂H₅

L'invention sera mieux comprise et ses avantages ressortiront bien des exemples qui suivent et qui illustrent la portée et les avantages du procédé et des nouveaux produits ci-dessus définis.

Ces exemples décrivent :
■ Exemple 1: mode de réalisation avec Ox = NBS et Ox & B sont utilisés en quantités stoechiométriques par rapport au Précurseur (II)
■ Exemple 2: mode de réalisation avec Ox = Br₂ et Ox est utilisé en quantité stoechiométrique par rapport au Précurseur (II). B est utilisé en quantité stoechiométrique par rapport à l'HBr libéré
■ Exemple 3: Post-traitement étapes a) à d) puis étapes e) à h)

Ces exemples ci-dessous montrent donc que :
- Le NBS et la pyridine peuvent être utilisés en quantités stoechiométriques par rapport au précurseur. Ce résultat est particulièrement intéressant car la pyridine en excès est très difficilement éliminée du milieu.
- Le Brome peut avantageusement remplacer le NBS d'un point de vue coût même si son utilisation impose de doubler la quantité de pyridine (il y a dans ce cas deux fois plus d'acide bromhydrique à piéger).
- Un post-traitement en une ou plusieurs étapes permet de d'améliorer la qualité du produit final en contribuant à l'élimination presque totale des résidus pyridiniques sans dégradation de la teneur en Silcaf de l'échantillon.

### Exemple 1 : Utilisation du système NBS/Pyridine stoechiométrique

### Charges:

| | | |
|---|---|---|
| • Précurseur (II) | 20,0 g | 57 mmol |
| • Ox = N-Bromosuccinimide 99% | 10,13 g | 57 mmol |
| • B = Pyridine | 4,5 g | 57 mmol |
| • Solvant = Dichlorométhane | 100 mL | / |

- Le précurseur, la pyridine et le dichlorométhane sont chargés dans un réacteur taré qui est mis sous ciel d'argon ; le milieu réactionnel est homogène pratiquement incolore.
- Le N-Bromosuccinimide (NBS) est ajouté en 30 minutes à la spatule. La température est maintenue inférieure à 25°C. Dès le premier ajout de NBS, le milieu réactionnel devient orange vif.
- Le milieu réactionnel est maintenu sous agitation à température ambiante pendant 2 heures après la fin de l'addition du NBS.
- Le milieu réactionnel est concentré sous pression réduite à l'évaporateur rotatif.
- Le résidu, qui se présente sous la forme d'une pâte orangée, est repris par 100 mL d'un mélange heptane/iPr₂O (1/1 : vol/vol) puis filtré sur verre fritté (125 mL) de porosité 4. Le gâteau de filtration est lavé par 4 fois 25 mL supplémentaires du mélange de solvant précédent.
- Les eaux-mères sont filtrées une seconde fois sur le gâteau. Le filtrat est concentré sous pression réduite.
- Un liquide orange vif inodore est obtenu : m = 18,8 g. Ce liquide est analysé par RMN (voir tableau 1).

### Exemple 2 : Remplacement du NBS par le Brome

### Charges :

| | | |
|---|---|---|
| • Précurseur( II) | 10,0 g | 28,5 mmol |
| • Ox = Brome | 4,55 g | 28,5 mmol |
| • B = Pyridine | 4,5 g | 57 mmol |
| • Solvant = Dichlorométhane | 60 mL | / |

• Le précurseur, la pyridine et 45 mL de dichlorométhane sont chargés dans un réacteur taré qui est mis sous ciel d'argon ; le milieu réactionnel est homogène pratiquement incolore.
• Une solution de Brome dans 15 mL de dichlorométhane est coulée dans le réacteur en 45 minutes. La température est maintenue inférieure à 25°C. Durant la coulée du Brome, le milieu réactionnel prend progressivement une teinte orange vive.
• Le milieu réactionnel est maintenu sous agitation à température ambiante pendant 2 heures après la fin de la coulée.
• Le milieu réactionnel est concentré sous pression réduite à l'évaporateur rotatif.
• Le résidu, qui se présente sous la forme d'une pâte orangée, est repris par 45 mL d'un mélange heptane/iPr₂O (1/1 : vol/vol) puis filtré sur verre fritté (125 mL) de porosité 4. Le gâteau de filtration est lavé par 2 fois 10 mL supplémentaires du mélange de solvant précédent.
• Les eaux-mères sont filtrées une seconde fois sur le gâteau. Le filtrat est concentré sous pression réduite.
• Un liquide orange vif inodore est obtenu : m = 9,8 g.

**Tableau 1 : Composition molaire comparative déterminée par RMN (% molaire)**

| Exemple | Azoalcoxysilane (I) | Précurseur (II) | Autres impuretés | Résidus Pyridiniques⁽ⁱ⁾ |
|---|---|---|---|---|
| 1 | 94, 5 % | 0,2 % | succinimide 5 % | 0,35 % |
| 2 | >96% | - | - | 0,2 % |

| | | | | |
|---|---|---|---|---|
| (i) Mélange de pyridine et de bromhydrate de pyridinium | | | | |

### Exemple 3 : Elimination des résidus pyridiniques.

D'un point de vue hygiène industrielle et écotoxicité, la présence de résidus pyridiniques est problématique. Il est donc particulièrement intéressant de disposer d'échantillons contenant une quantité minimale de ces composés.

Les résidus pyridiniques étant constitués par un mélange de bromhydrate de pyridinium et de pyridine, un double traitement a été envisagé :
1) par du Noir de Carbone afin d'adsorber les impuretés de type ionique.
2) par une résine légèrement acide (IR50 par exemple) préalablement séchée afin de piéger chimiquement la pyridine.

Le traitement au Noir 2S est réalisé selon le protocole opératoire suivant :
- a) Dilution du Silcaf dans du dichlorométhane
- b1) Addition de Noir 2S sec à raison de 6 % en poids par rapport au Silcaf engagé
- b2) Agitation 2 heures à température ambiante
- c) Elimination du Noir 2S par filtration
- d) Evaporation du solvant sous pression réduite (exemple 3A)

Le traitement à la résine est réalisé selon le protocole opératoire suivant :
- e) Dilution du Silcaf dans du dichlorométhane
- f1) Addition de la résine sèche à raison de 2 % en poids par rapport au Silcaf engagé
- f2) Agitation 2 heures à température ambiante
- g) Elimination de la résine par filtration
- h) Evaporation du solvant sous pression réduite (exemple 3B)

**Tableau 2 : Evolution de la nature et de la teneur en résidus pyridiniques en fonction du traitement**

| Exemple | Résidus Pyridiniques (en moles) | | | | | |
|---|---|---|---|---|---|---|
| | Avant traitement | | Après traitement par le Noir 2S | | Après traitements par la résine IR50 | |
| | Nature | Teneur | Nature | Teneur | Nature | Teneur |
| 3.A | Mélange | 0,7% | Pyridine | 0,08 % | / | / |
| 3.B | N.D.⁽ⁱ⁾ | N.D. | Pyridine | 0,3 % | N.D. | « 0,1% |

| | | | | | | |
|---|---|---|---|---|---|---|
| (i) N.D. = non déterminé | | | | | | |

Les exemples ci-dessus montrent que le traitement au noir 2S permet d'éliminer le bromhydrate de pyridinium tandis que la résine permet de piéger la pyridine. Mis en oeuvre consécutivement, ces deux traitements permettent donc d'accéder à des échantillons exempts ou presque de dérivés pyridiniques.

### Exemple 4 : Synthèse du précurseur (II)

La voie de synthèse suivie au laboratoire est décrite mais non exemplifiée dans plusieurs documents. Elle est explicitée sur le schéma ci-dessous.

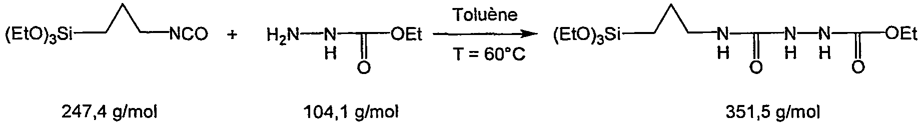

### Charges

| | | | |
|---|---|---|---|
| • | Isocyanatopropyltriéthoxysilane à 96% (ABCR) [silane précurseur (III)] | 99,8 g | 384 mmol |
| • | Carbazate d'éthyle [dérivé hydrazo précurseur (IV)] | 41,2 g | 384 mmol |
| • | Toluène Anhydre (Aldrich) | 384 mL | / |

### Protocole opératoire

- Le carbazate d'éthyle (IV) et le toluène anhydre sont chargés à température ambiante dans le réacteur taré qui est mis sous ciel d'argon.
- Le réacteur est mis sous agitation à 300 trs/min et le mélange réactionnel MR est ensuite chauffé à 60°C. (Le MR devient pratiquement homogène à chaud).
- Les 99,8 g de silane (III) sont ensuite additionnés en 60 minutes à l'aide d'une ampoule de coulée isobare.
- Le MR est maintenu 2 heures sous agitation à 60°C avant retour à température ambiante.
- Le MR est laissé au repos quelques heures à température ambiante.
- Un solide blanc cristallise. Il est ensuite filtré, lavé par 2 fois 150mL d'éther isopropylique puis essoré sous vide. Le solide est finalement mis à séché à l'étuve à 60°C jusqu'à poids constant. m = 131,5 g.
- Le produit constituant le précurseur (II) est analysé par RMN (pureté molaire > 99%). Rendement = 97,4%.

## Revendications

1. Procédé de préparation de composés organosiliciques comprenant un ou plusieurs composés , identiques ou différents entre eux, de formule (I) ci-après détaillée :
[(G⁰)₃SiO_{1/2}]ₘ [(G⁰)₂SiO_{2/2}]ₙ [G⁰SiO_{3/2}]ₒ [SiO_{4/2}]ₚ[(G₂)ₐ(G₁)_{a'}(Z-CO-N=N-CO-A)SiO_{(3-a-a')/2}]_{q} (I)
dans laquelle :
- m, n, o, p représentent chacun un nombre entier ou fractionnaire égal ou supérieur à 0 ;
- q représente un nombre entier ou fractionnaire égal ou supérieur à 1 ;
- a représente un nombre entier choisi parmi 0,1, 2 et 3 ;
- a' représente un nombre entier choisi parmi 0, 1 et 2 ;
- la somme a + a' se situe dans l'intervalle allant de 0 à 3 avec les conditions selon lesquelles :
- (C1)- quand a = 0, alors :
⇒ soit au moins un des m, n, o, p est un nombre différent de 0 (zéro) et q est égal ou supérieur à 1 ;
⇒ soit q est supérieur à 1 et chacun des m, n, o, p a une valeur quelconque,
⇒ et au moins un des symboles G° répond à la définition donnée ci-après pour G2 ;
- (C2)- et quand a + a' = 3, alors m = n = o = p = 0 (zéro);
- les symboles G⁰, identiques ou différents, représentent chacun l'un des groupes correspondant à G² ou G¹ ;
- les symboles G², identiques ou différents, représentent chacun : un groupe hydroxyle, un groupe monovalent hydrolysable ou deux G² forment ensemble et avec le silicium auquel ils sont liés, un cycle ayant 3 à 5 chaînons hydrocarbonés et pouvant comprendre au moins un hétéroatome, au moins l'un de ces chaînons pouvant également être un chaînon d'au moins un autre cycle hydrocarboné ou aromatique;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
+ un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
+ un groupe -X-G³ où : X représente -O-, -S- ou -NG⁴- avec G⁴ prenant l'une quelconque des significations données ci-avant pour G¹ G³ identique ou différent de G⁴, représente l'un quelconques des groupes définis pour G¹ les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
+ ou, lorsque q = 1, un groupe [-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ dans lequel les symboles Z, G¹, G², a, a', m, n, o, et p possèdent les définitions indiquées ci-avant ;
⇒ ce procédé étant du type de ceux consistant :
■ à mettre en oeuvre au moins un précurseur (II) d'au moins un composé organosilicique (I), ledit précurseur répondant à la formule (II) suivante :
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-HN-NH-CO-A)SiO_{(3-a-a')/2}] (II)
dans laquelle les symboles G°, G¹, G² Z, A, m, n, o, p, a, a' et q sont tels que définis ci-dessus en légende de la formule (I),
■ à oxyder le groupement hydrazino du précurseur (II) en groupement azo propre au composé organosilicique à groupe(s) azo activé(s) (I), à l'aide d'un système oxydant comprenant au moins un oxydant (Ox) et au moins une base (B),
■ et, dans le cas où la condition -(C1)- s'applique, à faire intervenir un réactif supplémentaire choisi parmi les silanes (pris seuls ou en mélange entre eux) de formule (III) :
(G⁰)₄₋ₚ₁Si (G^{2'})ₚ₁
dans laquelle :
* les symboles G° identiques ou différents, représentent chacun : un groupe hydrocarboné aliphatique, saturé ou insaturé ; un groupe carbocyclique, saturé ou insaturé et/ou aromatique, monocyclique ou polycyclique; ou un groupe représentant une partie hydrocarbonée aliphatique, saturée ou insaturée et une partie carbocyclique telle que définie ci-dessus; ou un reste polysiloxane ;
* les symboles G²' étant identiques ou différents et représentant un groupement monovalent hydrolysable répondant à la même définition que celle donnée supra pour les symboles G² décrits en relation avec la formule (I) ;
* p1 représente un nombre entier choisi parmi 1 et 2, de préférence 1 ;
⇒ et ce procédé étant **caractérisé en ce que** :
1) Ox est choisi dans le groupe comprenant : le brome, l'hypochlorite de tertiobutyle, l'acide trichloroisocyanurique, le chlore et leurs mélanges;
2) et/ou Ox (éventuellement B) est (sont) mis en oeuvre en quantités stoechiométriques par rapport au précurseur (II) ;
3) et/ou on soumet les composés organosiliciques (I) ainsi préparés à un post-traitement de purification visant à éliminer notamment les éventuels résidus indésirables de la base B utilisée.

2. Procédé selon la revendication 1 **caractérisé en ce que** le post-traitement consiste essentiellement à mettre en contact les composés organosiliciques (I) avec un piège à impuretés, ce piège étant sélectionné :
■ parmi les supports à affinité ionique, de préférence parmi ceux appartenant au groupe comprenant: le noir de carbone ;
■ et/ou parmi les supports à affinité chimique, de préférence parmi ceux appartenant au groupe comprenant: les résines à caractère acide.

3. Procédé selon la revendication 1 ou 2 **caractérisé en ce que** le post-traitement consiste essentiellement :
a. à mélanger un support à affinité ionique, de préférence le noir de carbone, avec une solution organique d'agent de charge, à raison de 0,1 à 20 % en poids, de préférence à raison de 1 à 10 % en poids de support à affinité ionique par rapport à l'agent de charge,
b. à laisser en contact de préférence sous agitation de quelques minutes à plusieurs heures,
c. à séparer le support chargé en impuretés de la solution d'agent de charge, de préférence par filtration,
d. à éliminer le solvant de préférence par évaporation,
e. à mélanger un support à affinité chimique, de préférence une résine à caractère acide (avantageusement une résine légèrement acide du type IR50), avec une solution organique de l'agent de charge, à raison de 0,01 à 10 % en poids, de préférence à raison de 0,1 à 5 % en poids de support à affinité chimique par rapport à l'agent de charge,
f. à laisser en contact de préférence sous agitation de quelques minutes à plusieurs heures,
g. à séparer le support chargé en impuretés de la solution d'agent de charge, de préférence par filtration,
h. à éliminer le solvant de préférence par évaporation ;
les étapes e) à h) pouvant éventuellement être réalisées avant les étapes a) à d) ou simultanément.

4. Procédé selon l'une quelconque des revendications précédentes, **caractérisé en ce que** dans la formule (I) :
■ les symboles 0°, identiques ou différents, répondent à la même définition que celle donnée ci-après pour les radicaux G¹ ou G² ;
■ les symboles G₁, identiques ou différents, représentent chacun : un radical alkyle, linéaire ou ramifié, en C₁-C₈ ; un radical cycloalkyle en C₅-C₁₀ ou un radical aryle en C₆-C₁₈;
■ les symboles G² identiques ou différents, représentent chacun : un radical alkoxy, linéaire ou ramifié, en C₁-C₈, éventuellement substitué par un ou plusieurs (C₁-C₈)alkoxy ;
■ Z représente le radical divalent Z'- Z"- où :
- Z' représente : une chaîne alkylène en C₁-C₈ ; un groupe cycloalkylène saturé en C₅-C₁₀ ; un groupe arylène en C₆-C₁₈ ou un groupe divalent constitué d'une combinaison d'au moins deux de ces radicaux ;
- Z" représente : -O- ou -NR⁴-, avec R⁴ étant : un atome d'hydrogène ; un radical alkyle, linéaire ou ramifié, en C₁-C₈ ; un radical cycloalkyle en C₅-C₁₀ ; un radical aryle en C₆-C₁₈; ou un radical (C₆-C₁₈)aryl-(C₁-C₈)alkyle ;
■ A désigne un groupe -O-G³ ou -NG⁴G³ où G³ et G⁴, identiques ou différents entre eux, représentent chacun : un radical alkyle, linéaire ou ramifié, en C₁-C₈ ; un radical cycloalkyle en C₅-C₁₀ ou un radical aryle en C₆-C₁₈.

5. Procédé selon l'une quelconque des revendications précédentes, **caractérisé en ce que** dans la formule (I) :
■ les symboles G°, identiques ou différents, répondent à la même définition que celle donnée ci-après pour les radicaux G¹ ou G² ;
■ les symboles G¹, identiques ou différents, sont choisis dans le groupe formé par les radicaux méthyle, éthyle, propyle, isopropyle, cyclohexyle et phényle ;
■ les symboles G² identiques ou différents, sont choisis dans le groupe formé par les radicaux méthoxy, éthoxy, n-propoxy, isopropoxy, n-butoxy, méthoxyméthoxy, éthoxyéthoxy et méthoxyéthoxy ;
■ Z représente le radical divalent Z'- Z"- où :
- Z' représente : une chaîne alkylène en C₁-C₈ ;
- Z" représente : -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

6. Procédé selon l'une quelconque des revendications précédentes, **caractérisé en ce que** dans la formule (I) :
■ les symboles G⁰, identiques ou différents, représentent chacun l'un des radicaux choisis ci-après pour G¹ ou G² ;
■ les symboles G¹, identiques ou différents, sont choisis dans le groupe formé par les radicaux méthyle, éthyle, propyle, isopropyle, cyclohexyle et phényle ;
■ les symboles G² identiques ou différents, sont choisis dans le groupe formé par les radicaux méthoxy, éthoxy, n-propoxy, isopropoxy et n-butoxy ;
■ Z représente le radical divalent Z'- Z"- où :
- Z' est choisi dans le groupe formé par les radicaux divalents méthylène, éthylène et propylène ;
- Z" représente : -O- ou -NR⁴- avec R⁴ étant un atome d'hydrogène ;
■ A désigne un groupe -O-G³ où G³ est choisi dans le groupe formé par les radicaux méthyle, éthyle, propyle, isopropyle, cyclohexyle et phényle.

7. Procédé selon l'une quelconque des revendications précédentes **caractérisé en ce que** les composés organosiliciques fonctionnalisés de formule générale (I) sont choisis dans le groupe des espèces suivantes :
■ (i) organosilanes fonctionnalisés correspondant à la formule (I) dans laquelle : a + a' = 3;m=n=o=p=0(zéro);etq=1;
■ (2i) oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1;
■ (3i) mélanges d'au moins une espèce (i) et/ou d'au moins une espèce (2i).

8. Procédé selon l'une quelconque des revendications précédentes, **caractérisé en ce que** les composés organosiliciques fonctionnalisés de formule générale (I) sont choisis dans le groupe des espèces suivantes :
■ (i) organosilanes fonctionnalisés correspondant à la formule (I) dans laquelle : a + a' = 3;m=n=o=p=0(zéro);etq=1;
■ (2i.1) oligomères siloxanes fonctionnalisés correspondant à la formule (I) dans laquelle : a+a'=2;m= 1 n = p = o = 0 (zéro) ; et q = 1 ;
■ (2i.2) oligomères siloxanes fonctionnalisés correspondant à la formule (I) dans laquelle : a+a'=1 ; m= 2 ; n = p = o = 0 (zéro);et q=1;
■ (3i) mélanges d'au moins une espèce(s) (i) et/ou d'au moins une sous-espèce(s) (2i.1) et/ou d'au moins une sous-espèce(s) (2i.2).

9. Procédé selon l'une quelconque des revendications précédentes **caractérisé en ce que** les composés produits sont des silanes de l'espèce (i) ou , en d'autres termes ceux répondant à la formule (I') suivante :
(G²)ₐ(G¹)_{a'}(Z-CO-N=N-CO-A)SiO(_{3-a-a'})_{/2} (I')
dans laquelle :
⇒ a représente un nombre entier choisi parmi 1, 2 et 3 ;
⇒ a' représente un nombre entier choisi parmi 0, 1 et 2 ;
⇒ a + a' = 3 ;
⇒ les symboles G¹, G², Z et A répondent aux mêmes définitions que celles données ci-dessus pour les formes F1, F2 ou F3 préférées.

## Claims

1. A method of preparation of organosilicon compounds comprising one or more compounds, which may be identical to or different from one another, of the following formula (I) :
[(G⁰)₃SiO_{1/2}]ₘ [(G⁰)₂SiO_{2/2}]ₙ [G⁰SiO_{3/2}]o [SiO_{4/2}]ₚ [(G²)ₐ(G¹)_{a'} (Z-CO-N=N-CO-A)SiO_{(3-a-a')}/2]_{q} (I)
in which :
- m, n, o, p each represent an integer or fraction greater than or equal to 0;
- q represents an integer or fraction greater than or equal to 1;
- a represents an integer selected from 0, 1, 2 and 3;
- a' represents an integer selected from 0, 1 and 2;
- the sum a + a' is within the range from 0 to 3 with the conditions according to which:
- (C1)- when a = 0, then:
=> either at least one of m, n, o, p is a number different from 0 (zero) and q is greater than or equal to 1;
=> or q is greater than 1 and each of m, n, o, p has any value,
=> and at least one of the symbols G⁰ corresponds to the definition given hereunder for G²;
- (C2)- and when a + a' = 3, then m = n = o = p = 0 (zero);
- the symbols G°, which may be identical or different, each represent one of the groups corresponding to G² or G¹;
- the symbols G², which may be identical or different, each represent: a hydroxyl group, a hydrolyzable monovalent group or two G² form together, and with the silicon to which they are attached, a ring having 3 to 5 hydrocarbon ring members and that can contain at least one heteroatom, and at least one of said ring members can also be a ring member of at least one other hydrocarbon or aromatic ring;
- the symbols G¹, which may be identical or different, each represent: a saturated or unsaturated, aliphatic hydrocarbon group; a saturated or unsaturated and/or aromatic, monocyclic or polycyclic, carbocyclic group; or a group representing a saturated or unsaturated, aliphatic hydrocarbon moiety and a carbocyclic moiety as defined above;
- the symbol Z represents a divalent radical selected from: a saturated or unsaturated, aliphatic hydrocarbon group; a saturated, unsaturated and/or aromatic, monocyclic or polycyclic carbocyclic group; and a group having a saturated or unsaturated aliphatic hydrocarbon moiety and a carbocyclic moiety as defined above; said divalent radical being optionally substituted or interrupted by an oxygen atom and/or a sulfur atom and/or a nitrogen atom, said nitrogen atom bearing 1 monovalent group selected from: a hydrogen atom; a saturated or unsaturated aliphatic hydrocarbon atom; a saturated or unsaturated and/or aromatic, monocyclic or polycyclic, carbocyclic group; and a group having a saturated or unsaturated, aliphatic hydrocarbon moiety and a carbocyclic moiety as defined above;
- the symbol A represents:
+ a saturated or unsaturated, aliphatic hydrocarbon group; a saturated or unsaturated and/or aromatic, monocyclic or polycyclic, carbocyclic group; or a group representing a saturated or unsaturated, aliphatic hydrocarbon moiety and a carbocyclic moiety as defined above;
+ a group -X-G³ where: X represents -O-, -S- or -NG⁴ with G⁴ having any one of the meanings given previously for G¹; G³, which may be identical to or different from G⁴, represents any one of the groups defined for G¹; the substituents G³ and G⁴ of the group -NG⁴G³ can form together, and with the nitrogen atom to which they are attached, a single ring having from 5 to 7 ring members, containing in the ring 3 to 6 carbon atoms, 1 or 2 nitrogen atom(s) and optionally 1 or 2 unsaturated double bond(s);
+ or, when q = 1, a group [-Z-SiO(_{3-a-a')/2}(G²)ₐ(G¹)_{a'}] [(G⁰)SiO_{1/2}]ₘ[(G⁰)SiO_{2/2}]ₙ [G⁰SiO_{3/2}]ₒ [SiO_{4/2}]ₚ in which the symbols Z, G¹, G², a, a', m, n, o, and p have the definitions stated previously;
=> this method being of the type of those comprising:
■ employing at least one precursor (II) of at least one organosilicon compound (I), said precursor corresponding to the following formula (II):
(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-HN-NH-CO-A) SiO(_{3-a-a'})_{/2}] (II)
in which the symbols G⁰, G¹, G², Z, A, m, n, o, p, a, a' and q are as defined above under formula (I),
■ oxidizing the hydrazino group of the precursor (II) to an azo group belonging to the organosilicon compound with activated azo group(s) (I), by means of an oxidizing system comprising at least one oxidizing agent (Ox) and at least one base (B),
■ and, in the case when the condition -(C1)-applies, employing an additional reagent selected from the silanes (used alone or as a mixture) of formula (III):
(G⁰)₄₋ₚ₁Si(G^{2'})ₚ₁
in which:
* the symbols G°, which may be identical or different, each represent: a saturated or unsaturated, aliphatic hydrocarbon group; a saturated or unsaturated and/or aromatic, monocyclic or polycyclic, carbocyclic group; or a group representing a saturated or unsaturated, aliphatic hydrocarbon moiety and a carbocyclic moiety as defined above; or a polysiloxane residue;
* the symbols G^{2'}, which may be identical or different, represent a hydrolyzable monovalent group corresponding to the same definition as that given above for the symbols G² described in relation to formula (I) ;
* p1 represents an integer selected from 1 and 2, preferably 1;
=> and said method being **characterized in that**:
1) Ox is selected from the group comprising: bromine, tert-butyl hypochlorite, trichloroisocyanuric acid, chlorine and mixtures thereof;
2) and/or Ox (optionally B) is (are) used in stoichiometric amounts relative to precursor (II) ;
3) and/or the organosilicon compounds (I) thus prepared are submitted to a post-treatment of purification aiming notably to remove any unwanted residues of the base B used.

2. The method as claimed in claim 1, **characterized in that** the post-treatment essentially comprises bringing the organosilicon compounds (I) into contact with an impurities trap, this trap being selected:
■ from ionic-affinity supports, preferably from those belonging to the group comprising: carbon black;
■ and/or from chemical-affinity supports, preferably from those belonging to the group comprising: resins of an acidic nature.

3. The method as claimed in claim 1 or 2, **characterized in that** the post-treatment essentially comprises:
a mixing an ionic-affinity support, preferably carbon black, with an organic solution of filling agent, at a rate of 0.1 to 20 wt.%, preferably at a rate of 1 to 10 wt.% of ionic-affinity support relative to the filling agent,
b. leaving in contact preferably with stirring for a few minutes to several hours,
c. separating the support loaded with impurities from the solution of filling agent, preferably by filtration,
d. removing the solvent preferably by evaporation,
e. mixing a chemical-affinity support, preferably a resin of acidic nature (advantageously a slightly acid resin of type IR50), with an organic solution of the filling agent, at a rate of 0.01 to 10 wt.%, preferably at a rate of 0.1 to 5 wt.% of chemical-affinity support relative to the filling agent,
f. leaving in contact preferably with stirring for a few minutes to several hours,
g. separating the support loaded with impurities from the solution of filling agent, preferably by filtration,
h. removing the solvent preferably by evaporation;
and stages e) to h) can optionally be carried out before stages a) to d) or simultaneously.

4. The method as claimed in any one of the preceding claims, **characterized in that** in formula (I):
■ the symbols G°, which may be identical or different, correspond to the same definition as that given hereunder for the radicals G¹ or G²;
■ the symbols G₁, which may be identical or different, each represent: a linear or branched C₁-C₈ alkyl radical; a C₅-C₁₀ cycloalkyl radical or a C₆-C₁₈ aryl radical;
■ the symbols G², which may be identical or different, each represent: a linear or branched C₁-C₈ alkoxy radical, optionally substituted with one or more (C₁-C₈) alkoxy;
■ Z represents the divalent radical Z'-Z"- where:
- Z' represents: a C₁-C₈ alkylene chain; a C₅-C₁₀ saturated cycloalkylene group; a C₆-C₁₈ arylene group; or a divalent group comprising a combination of at least two of these radicals;
- Z" represents: -O- or -NR⁴-, where R⁴ is: a hydrogen atom; a linear or branched C₁-C₈ alkyl radical; a C₅-C₁₀ cycloalkyl radical; a C₆-C₁₈ aryl radical or a (C₆-C₁₈)aryl-(C₁-C₈)alkyl radical;
■ A denotes a group -O-G³ or -NG⁴G³ where G³ and G⁴ which may be identical to or different from one another, each represent: a linear or branched C₁-C₈ alkyl radical; a C₅-C₁₀ cycloalkyl radical or a C₆-C₁₈ aryl radical.

5. The method as claimed in any one of the preceding claims, **characterized in that** in formula (I):
■ the symbols G°, which may be identical or different, correspond to the same definition as that given hereunder for the radicals G¹ or G²;
■ the symbols G¹, which may be identical or different, are selected from the group comprising the methyl, ethyl, propyl, isopropyl, cyclohexyl and phenyl radicals;
■ the symbols G², which may be identical or different, are selected from the group comprising the methoxy, ethoxy, n-propoxy, isopropoxy, n-butoxy, methoxymethoxy, ethoxyethoxy and methoxyethoxy radicals;
■ Z represents the divalent radical Z'-Z"- where:
- Z' represents: a C₁-C₈ alkylene chain;
- Z" represents: -O- or -NR⁴-, with R⁴ being selected from the group comprising: hydrogen, the methyl, ethyl, propyl, isopropyl, n-butyl, isobutyl, t-butyl, pentyl, hexyl, cyclohexyl, and benzyl radicals;
■ A denotes a group -O-G³ or -NG⁴G³ where G³ and G⁴, which may be identical to or different from one another, are selected from the group comprising the methyl, ethyl, propyl, isopropyl, cyclohexyl and phenyl radicals.

6. The method as claimed in any one of the preceding claims, **characterized in that** in formula (I):
■ the symbols G°, which may be identical or different, each represent one of the radicals selected hereunder for G¹ or G²_{;}
■ the symbols G¹, which may be identical or different, are selected from the group comprising the methyl, ethyl, propyl, isopropyl, cyclohexyl and phenyl radicals;
■ the symbols G², which may be identical or different, are selected from the group comprising the methoxy, ethoxy, n-propoxy, isopropoxy and n-butoxy radicals;
■ Z represents the divalent radical Z'-Z"- where:
- Z' is selected from the group comprising the methylene, ethylene and propylene divalent radicals;
- Z" represents: -O- or -NR⁹- with R⁴ being a hydrogen atom;
■ A denotes a group -O-G³ where G³ is selected from the group comprising the methyl, ethyl, propyl, isopropyl, cyclohexyl and phenyl radicals.

7. The method as claimed in any one of the preceding claims, **characterized in that** the functionalized organosilicon compounds of general formula (I) are selected from the group comprising the following species:
■ (i) functionalized organosilanes corresponding to formula (I) in which: a + a' = 3; m = n = o = p = 0 (zero); and q = 1;
■ (2i) functionalized siloxane oligomers corresponding to formula (I) in which: a + a' = 1 or 2; m is in the range from 1 to 2; n = p = o = 0 (zero); and q = 1;
■ (3i) mixtures of at least one species (i) and/or of at least one species (2i).

8. The method as claimed in any one of the preceding claims, **characterized in that** the functionalized organosilicon compounds of general formula (I) are selected from the group comprising the following species:
■ (i) functionalized organosilanes corresponding to formula (I) in which: a + a' - 3; m = n = o = p = 0 (zero); and q = 1;
■ (2i.1) functionalized siloxane oligomers corresponding to formula (I) in which: a + a' = 2; m = 1; n = p = o = 0 (zero); and q = 1;
■ (2i.2) functionalized siloxane oligomers corresponding to formula (I) in which: a + a' = 1; m = 2; n = p = o = 0 (zero); and q = 1;
■ (3i) mixtures of at least one species (i) and/or of at least one subspecies (2i.1) and/or of at least one subspecies (2i.2).

9. The method as claimed in any one of the preceding claims, **characterized in that** the compounds produced are silanes of species (i), or in other words those corresponding to the following formula (I'):
(G²)ₐ(G¹)_{a'} (Z-CO-N=N-CO-A)SiO_{(3-a-a')/2} (I')
in which:
=> a represents an integer selected from 1, 2 and 3;
=> a' represents an integer selected from 0, 1 and 2;
=> a + a' = 3;
=> the symbols G¹, G², Z and A correspond to the same definitions as those given above for the preferred forms F1, F2 or F3.

## Patentansprüche

1. Verfahren zur Herstellung von siliciumorganischen Verbindungen mit einer oder mehreren identischen oder sich voneinander unterscheidenden Verbindungen der nachstehenden detaillierten Formel (I):
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
wobei:
- m, n, o, p jeweils eine ganze Zahl oder eine rationale Zahl gleich oder größer 0 darstellen;
- q eine ganze Zahl oder eine rationale Zahl gleich oder größer 1 darstellt;
- a eine ganze Zahl gewählt aus 0, 1, 2 und 3 darstellt;
- a' eine ganze Zahl gewählt aus 0, 1 und 2 darstellt;
- die Summe a + a' im Bereich zwischen 0 und 3 liegt, mit den Bedingungen:
- (B1)-, wenn a = 0, dann:
⇒ ist wenigstens eines von m, n, o, p verschieden von 0 (Null) und ist q gleich oder größer 1;
⇒ ist q größer 1 und hat jedes m, n, o, p einen beliebigen Wert;
⇒ und entspricht wenigstens eines der Symbole G⁰ der nachstehend für G² gegebenen Definition;
- (B2)-, und wenn a + a' = 3, dann m= n = o = p = 0 (Null)
- die identischen oder sich voneinander unterscheidenden Symbole G⁰ jeweils eine der Gruppen darstellen, die G² oder G¹ entsprechen;
- die identischen oder sich voneinander unterscheidenden Symbole G² jeweils darstellen: eine Hydroxylgruppe, eine hydrolysierbare einwertige Gruppe, in der zwei G² miteinander und mit dem Silicium, an das sie gebunden sind, einen Ring bilden, der drei bis fünf Kohlenwasserstoff-Glieder hat und wenigstens ein Heteroatom enthalten kann, wobei wenigstens eines dieser Glieder auch ein Glied wenigstens eines anderen Kohlwasserstoffrings oder aromatischen Rings sein kann;
- die identischen oder sich voneinander unterscheidenden Symbole G¹ jeweils darstellen: eine gesättigte oder ungesättigte aliphatische Kohlenwasserstoffgruppe; eine gesättigte oder ungesättigte und/oder aromatische, monocyclische oder polycyclische carbocyclische Gruppe; oder eine Gruppe, die einen gesättigten oder ungesättigten aliphatischen Kohlenwasserstoffteil oder einen carbocyclischen Teil wie oben definiert aufweist;
- das Symbol Z ein zweiwertiges Radikal darstellt, das gewählt ist aus: einer gesättigten oder ungesättigten aliphatischen Kohlenwasserstoffgruppe; einer gesättigten, ungesättigten und/oder aromatischen, monocyclischen oder polycyclischen carbocyclischen Gruppe; und einer Gruppe, die einen gesättigten oder ungesättigten aliphatischen Kohlenwasserstoffteil und einen carbocyclischen Teil wie oben definiert aufweist; wobei das zweiwertige Radikal gegebenenfalls durch ein Sauerstoffatom und/oder ein Schwefelatom und/oder ein Stickstoffatom substituiert oder unterbrochen ist, wobei das Stickstoffatom eine einwertige Gruppe trägt, die gewählt ist aus: einem Wasserstoffatom; einem gesättigten oder ungesättigten aliphatischen Kohlenwasserstoffatom; einer gesättigten oder ungesättigten und/oder aromatischen, monocyclischen oder polycyclischen carbocyclischen Gruppe; und einer Gruppe, die einen gesättigten oder ungesättigten aliphatischen Kohlenwasserstoffteil und einen carbocyclischen Teil wie oben definiert aufweist;
- das Symbol A bedeutet:
+ eine gesättigte oder ungesättigte aliphatische Kohlenwasserstoffgruppe; eine gesättigte oder ungesättigte und/oder aromatische, monocyclische oder polycyclische carbocyclische Gruppe; oder eine Gruppe, die einen gesättigten oder ungesättigten aliphatischen Kohlenwasserstoffteil und einen carbocyclischen Teil wie oben definiert aufweist;
+ eine Gruppe -X-G³, worin X -O-, -S- oder -NG⁴ bedeutet, wobei G⁴ eine beliebige der vorstehend für G¹ gegebenen Bedeutungen annimmt; G³, das mit G⁴ identisch ist oder sich davon unterscheidet, eine beliebige der für G¹ definierten Gruppen darstellt; wobei die Substituenten G³ und G⁴ der Gruppe -NG⁴G³ ferner miteinander und mit dem Stickstoffatom, an das sie gebunden sind, einen einzigen Ring bilden können, der fünf bis sieben Glieder hat, der drei bis sechs Kohlenstoffatome, ein oder zwei Stickstoffatome und gegebenenfalls ein oder zwei ungesättigte Doppelbindungen in dem Ring enthält;
+ oder, wenn q = 1, eine Gruppe [-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ, bei der die Symbole Z, G¹, G², a, a', m, n, o und p die vorstehend angegebenen Definitionen besitzen;
⇒ wobei das Verfahren vom Typ derjenigen ist, die darin bestehen:
■ wenigstens einen Präkursor (II) wenigstens einer siliciumorganischen Verbindung (I) zu verwenden, wobei der Präkursor der nachstehenden Formel (II) entspricht:
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-HN-NH-CO-A)SiO_{(3-a-a')/2}] (II)
wobei die Symbole G⁰; G¹, G² Z, A, m, n, o, p, a, a' und q wie oben bei Formel (I) definiert sind,
■ die Hydrazingruppe des Präkursors (II) zu einer Azogruppe, die für die siliciumorganische Verbindung mit aktivierter bzw. aktivierten Azogruppen (I) spezifisch ist, mit Hilfe eines oxidierenden Systems zu oxidieren, das wenigstens ein Oxidationsmittel (Ox) und wenigstens eine Base umfasst,
■ und, falls die Bedingung -(B1)- zutrifft, ein zusätzliches Reagens einzusetzen, das aus Silanen (alleine oder miteinander gemischt) gewählt ist mit der Formel (III):
(G⁰)₄₋ₚ₁Si(G²')ₚ₁
wobei:
• die identischen oder sich voneinander unterscheidenden Symbole G⁰ jeweils darstellen: eine gesättigte oder ungesättigte aliphatische Kohlenwasserstoffgruppe; eine gesättigte oder ungesättigte und/oder aromatische, monocyclische oder polycyclische carbocyclische Gruppe; oder eine Gruppe, die einen gesättigten oder ungesättigten aliphatischen Kohlenwasserstoffteil und einen carbocyclischen Teil wie oben definiert aufweist; oder einen Polysiloxanrest;
• die Symbole G² identisch sind oder sich voneinander unterscheiden und eine hydrolysierbare einwertige Gruppe darstellen, mit der gleichen Definition, wie der vorstehend für die in Zusammenhang mit der Formel (I) beschriebenen Symbole G² gegebenen;
• p1 eine ganze Zahl darstellt, gewählt aus 1 und 2, vorzugsweise 1;
⇒ und wobei das Verfahren **dadurch gekennzeichnet, dass**
1) Ox gewählt ist aus der Gruppe, die enthält: Brom, tert-Butylhypochlorit, Trichloroisocyanursäure, Chlor und deren Mischungen;
2) und/oder Ox (gegebenenfalls B) in Bezug auf den Präkursor (II) in stöchiometrischen Mengenverhältnissen eingesetzt wird (werden);
3) und/oder die auf diese Weise hergestellten siliciumorganischen Verbindungen (I) einer Nachbehandlungen zur Reinigung unterzogen werden, um insbesondere die eventuell vorhandenen unerwünschten Rückstände der verwendeten Base B zu eliminieren.

2. Verfahren nach Anspruch 1,
**dadurch gekennzeichnet, dass** die Nachbehandlung im Wesentlichen darin besteht die siliciumorganischen Verbindungen (I) mit einer Falle für Verunreinigungen in Kontakt zu bringen, wobei die Falle gewählt ist aus:
■ Trägern mit Ionenaffinität, vorzugsweise denen, die zu der Gruppe gehören, die Ruß enthalten;
■ und/oder Trägern mit chemischer Affinität, vorzugsweise denen, die zu der Gruppe gehören, die saure Harze enthalten.

3. Verfahren nach Anspruch 1 oder 2,
**dadurch gekennzeichnet, dass** die Nachbehandlung im Wesentlichen darin besteht:
a. einen Träger mit Ionenaffinität, vorzugsweise Ruß, mit einer organischen Reaktionsmittellösung im Verhältnis von 0,1 bis 20 Gew.-%, vorzugsweise im Verhältnis von 1 bis 10 Gew.-% des Trägers mit Ionenaffinität in Bezug auf das Reaktionsmittel zu mischen,
b. vorzugsweise unter Bewegung einige Minuten bis mehrere Stunden den Kontakt zu belassen,
c. den mit Verunreinigungen beladenen Träger aus der Reaktionsmittellösung vorzugsweise durch Filtern abzutrennen,
d. das Lösungsmittel vorzugsweise durch Verdampfung zu eliminieren,
e. einen Träger mit chemischer Affinität, vorzugsweise ein saures Harz (vorteilhafterweise ein leicht saures Harz vom Typ IR50), mit einer organischen Reaktionsmittellösung im Verhältnis von 0,01 bis 10 Gew.-%, vorzugsweise im Verhältnis von 0,1 bis 5 Gew.% des Trägers mit chemischer Affinität in Bezug auf das Reaktionsmittel zu mischen,
f. vorzugsweise unter Bewegung einige Minuten bis mehrere Stunden den Kontakt zu belassen,
g. den mit Verunreinigungen beladenen Träger aus der Reaktionsmittellösung vorzugsweise durch Filtern abzutrennen,
h. das Lösungsmittel vorzugsweise durch Verdampfung zu eliminieren;
wobei die Schritte e) bis h) gegebenenfalls vor den Schritten a) bis d) oder gleichzeitig ausgeführt werden können.

4. Verfahren nach einem der vorhergehenden Ansprüche,
**dadurch gekennzeichnet, dass** in der Formel (I):
■ die identischen oder sich voneinander unterscheidenden Symbole G⁰ der gleichen Definition wie der nachstehend für die Radikalen G¹ oder G² gegebenen entsprechen;
■ die identischen oder sich voneinander unterscheidenden Symbole G¹ jeweils ein lineares oder verzweigtes Alkylradikal mit einem bis acht Kohlenstoffatomen, ein Cycloalkylradikal mit fünf bis zehn Kohlenstoffatomen oder ein Arylradikal mit sechs bis achtzehn Kohlenstoffatomen darstellen;
■ die identischen oder sich voneinander unterscheidenden Symbole G² jeweils ein lineares oder verzweigtes Alkoxyradikal mit einem bis acht Kohlenstoffatomen, gegebenenfalls substituiert durch eine oder mehrere (C₁-C₈)-Alkoxygruppen, darstellen;
■ Z das zweiwertige Radikal Z'-Z"- darstellt, wobei:
- Z' eine Alkylenkette mit einem bis acht Kohlenstoffatomen, eine gesättigte Cycloalkylengruppe mit fünf bis zehn Kohlenstoffatomen, eine Arylengruppe mit sechs bis achtzehn Kohlenstoffatomen oder eine zweiwertige Gruppe, die aus einer Kombination von wenigstens zwei dieser Radikale gebildet ist, darstellt;
- Z" -0- oder -NR⁴ darstellt, wobei R⁴ ein Wasserstoffatom, ein lineares oder verzweigtes Alkylradikal mit einem bis acht Kohlenstoffatomen, ein Cycloalkylradikal mit fünf bis zehn Kohlenstoffatomen, ein Arylradikal mit sechs bis achtzehn Kohlenstoffatomen oder ein (C₆₇-C₁₈)-Aryl-(C₁-C₈)-Alkylradikal ist;
■ A eine Gruppe -O-G³ oder -NG⁴G³ bezeichnet, worin G³ und G⁴, identisch oder sich voneinander unterscheidend, jeweils ein lineares oder verzweigtes Alkylradikal mit einem bis acht Kohlenstoffatomen, ein Cycloalkylradikal mit fünf bis zehn Kohlenstoffatomen oder ein Arylradikal mit sechs bis achtzehn Kohlenstoffatomen darstellen.

5. Verfahren nach einem der vorhergehenden Ansprüche,
**dadurch gekennzeichnet, dass** in der Formel (I):
■ die identischen oder sich voneinander unterscheidenden Symbole G⁰ der gleichen Definition wie der nachstehend für die Radikale G¹ oder G² gegebenen entsprechen;
■ die identischen oder sich voneinander unterscheidenden Symbole G¹ aus der Gruppe gewählt sind, die aus Methyl-, Ethyl-, Propyl-, Isopropyl-, Cyclohexyl- und Phenyl-Radikalen gebildet wird;
■ die identischen oder sich voneinander unterscheidenden Symbole G² aus der Gruppe gewählt sind, die aus Methoxy-, Ethoxy-, n-Propoxy-, Isopropoxy-, n-Butoxy-, Methoxymethoxy-, Ethoxyethoxy- und Methoxyethoxy-Radikalen gebildet wird;
■ Z das zweiwertige Radikal Z'-Z"- darstellt, wobei:
- Z' eine Alkylenkette mit einem bis acht Kohlenstoffatomen darstellt;
- Z" -0- oder -NR⁴ darstellt, wobei R⁴ aus der Gruppe gewählt ist, die aus Wasserstoff, Methyl-, Ethyl-, Propyl-, Isopropyl-, n-Butyl-, Isobutyl-, t-Butyl-, Pentyl-, Hexyl-, Cyclohexyl- und Benzyl-Radikalen gebildet wird;
■ A eine Gruppe -O-G³ oder -NG⁴G³ bezeichnet, worin G³ und G⁴, identisch oder sich voneinander unterscheidend, aus der Gruppe gewählt sind, die aus Methyl-, Ethyl-, Propyl-, Isopropyl-, Cyclohexyl- und Phenyl-Radikalen gebildet wird.

6. Verfahren nach einem der vorhergehenden Ansprüche,
**dadurch gekennzeichnet, dass** in der Formel (I):
■ die identischen oder sich voneinander unterscheidenden Symbole G⁰ jeweils eines der nachstehend für G¹ oder G² gewählten Radikale darstellen;
■ die identischen oder sich voneinander unterscheidenden Symbole G¹ aus der Gruppe gewählt sind, die aus Methyl-, Ethyl-, Propyl-, Isopropyl-, Cyclohexyl- und Phenyl-Radikalen gebildet wird;
■ die identischen oder sich voneinander unterscheidenden Symbole G² aus der Gruppe gewählt sind, die aus Methoxy-, Ethoxy-, n-Propoxy-, Isopropoxy- und n-Butoxy-Radikalen gebildet wird;
■ Z das zweiwertige Radikal Z'-Z"- darstellt, wobei:
- Z' aus der Gruppe gewählt ist, die aus zweiwertigen Methylen-, Ethylen- und Propylen-Radikalen gebildet wird;
- Z" -O- oder -NR⁴ darstellt, wobei R⁴ ein Wasserstoffatom ist;
■ A eine Gruppe -O-G³ bezeichnet, worin G³ aus der Gruppe gewählt ist, die aus Methyl-, Ethyl-, Propyl-, Isopropyl-, Cyclohexyl- und Phenyl-Radikalen gebildet wird.

7. Verfahren nach einem der vorhergehenden Ansprüche,
**dadurch gekennzeichnet, dass** die funktionellen siliciumorganischen Verbindungen der allgemeinen Formel (I) aus der Gruppe der folgenden Spezies gewählt sind:
■ (i) funktionelle Organosilane, die der Formel (I) entsprechen, in der gilt: a + a' = 3; m = n = o = p = 0 (Null); und q = 1;
■ (ii) funktionelle Siloxanoligomere, die der Formel (I) entsprechen, in der gilt: a + a' = 1 oder 2; m liegt im Bereich zwischen 1 und 2; n = p = o = 0 (Null); und q = 1;
■ (iii) Mischungen aus wenigstens einer Spezies (i) und/oder wenigstens einer Spezies (ii).

8. Verfahren nach einem der vorhergehenden Ansprüche,
**dadurch gekennzeichnet, dass** die funktionellen siliciumorganischen Verbindungen der allgemeinen Formel (I) aus der Gruppe der folgenden Spezies gewählt sind:
■ (i) funktionelle Organosilane, die der Formel (I) entsprechen, in der gilt: a + a' = 3; m = n = o = p = 0 (Null); und q = 1;
■ (ii.1) funktionelle Siloxanoligomere, die der Formel (I) entsprechen, in der gilt: a + a' = 2; m = 1 ; n = p = o = 0 (Null); und q = 1;
■ (ii.2) funktionelle Siloxanoligomere, die der Formel (I) entsprechen, in der gilt: a + a' = 1; m =2 ; n = p = o = 0 (Null); und q = 1;
■ (iii) Mischungen aus wenigstens einer Spezies (i) und/oder wenigstens einer Unter-Spezies (ii.1) und/oder wenigstens einer Unter-Spezies (ii.2).

9. Verfahren nach einem der vorhergehenden Ansprüche,
**dadurch gekennzeichnet, dass** die hergestellten Verbindungen Silane der Spezies (i) oder, mit anderen Worten, diejenigen sind, die der folgenden Formel (I') entsprechen:
(G²)ₐ(G¹)ₐ(Z-CO-N=N-CO-A)SiO_{(3-a-a')/2} (I')
wobei:
⇒ a eine ganze Zahl gewählt aus 1, 2 und 3 darstellt;
⇒ a' eine ganze Zahl gewählt aus 0, 1 und 2 darstellt;
⇒ a+a'=3;
⇒ die Symbole G¹, G², Z und A den gleichen Definitionen entsprechen wie den oben für die bevorzugten Formen F1, F2 oder F3 genannten.
